Europäisches Patentamt

European Patent Office

Office européen des brevets

(19)

(11)  EP 0 717 532 A1

## (12)  EUROPEAN PATENT APPLICATION

(43) Date of publication:
19.06.1996  Bulletin 1996/25

(51) Int. Cl.⁶: H04L 12/56

(21) Application number: 94480170.3

(22) Date of filing: 13.12.1994

(84) Designated Contracting States:
DE FR GB

(71) Applicant: INTERNATIONAL BUSINESS
MACHINES CORPORATION
Armonk, N.Y. 10504 (US)

(72) Inventors:
• Calvignac, Jean
F-06610 La Gaude (FR)
• Verplanken, Fabrice
F-06610 La Gaude (FR)
• Orsatti, Daniel,
Le Dauphin Bleu
F-06800 Cagnes-sur-mer (FR)

(74) Representative: Therias, Philippe
Compagnie IBM FRANCE,
Département de Propriété Intellectuelle
06610 La Gaude (FR)

### (54)  Dynamic fair queuing to support best effort traffic in an ATM network

(57)    A traffic control apparatus implemented in a virtual path ATM communication system comprising a plurality of hops interconnected by physical links which comprise virtual paths including a plurality of virtual channels. A connection between two hops is defined as the combination of a physical link, a virtual path, and a virtual channel. Said connections are shared between a reserved bandwidth service and a best effort service. ATM data cells conveyed on said best effort service are routed from hop to hop by analyzing their virtual connection identifier. This is done by managing a pool of free queues being able to store ATM data cells, each of said queues storing all the incoming ATM data cells having the same virtual channel identifier.

Fig. 5

EP 0 717 532 A1

**Description**

Field of the invention:

This invention relates in general to a networking communication system and more particularly to a dynamic connection-based queuing mechanism to support best effort service in a high speed ATM network.

Background art:

Asynchronous Transfer Mode (ATM) is to become the base technology for the next generation of high speed networks.

High speed networks support a great diversity of applications with different traffic and Quality Of Service ( QOS ) requirements. Such diversity require different control flow strategies. For example, certain applications like multimedia and time critical data applications require guaranteed levels of delay and throughput but can tolerate losses, while others like LAN traffic can tolerate variations in delay and throughput but are very loss sensitive.

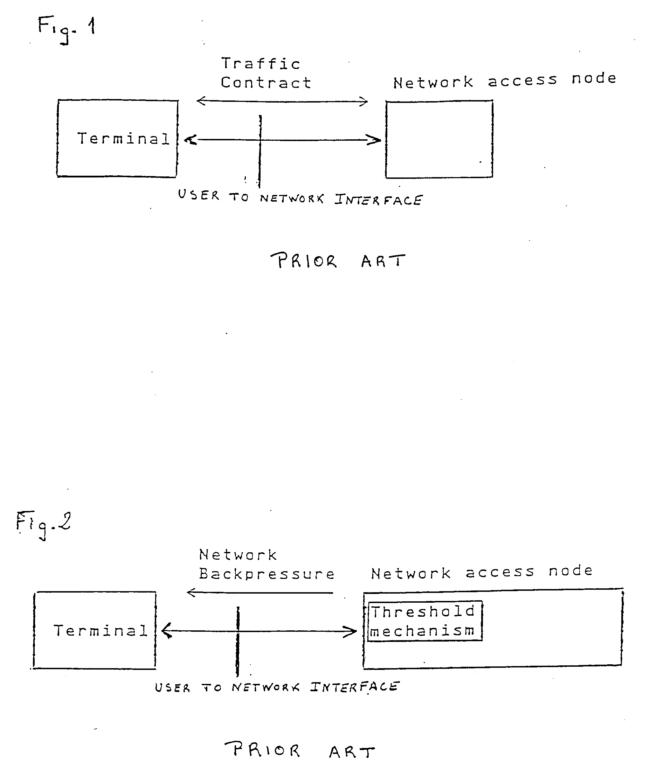

In the ATM Reserved Bandwidth ( RB ) service, a user needs to establish a traffic contract with the network at call set-up before transmitting data (see Fig. 1). The contract includes specification of a desired QOS class and a set of traffic descriptors. The network, through resource allocation, provides the desired QOS for the ATM connection or refuses the call. The allocated bandwidth between a source and a destination may be less than the peak rate in order to benefit from statistical multiplexing gains, but it requires complex software and may cause traffic congestion and data losses.

In a LAN environment, sources are bursty and unpredictable. Traffic has an extremely high variability on time scales ranging over several orders of magnitude. For such unpredictable sources, the peak rate could be allocated in order to avoid heavy losses inside the network. However, the network would be inefficiently used, since bandwidth would be reserved even during idle periods.

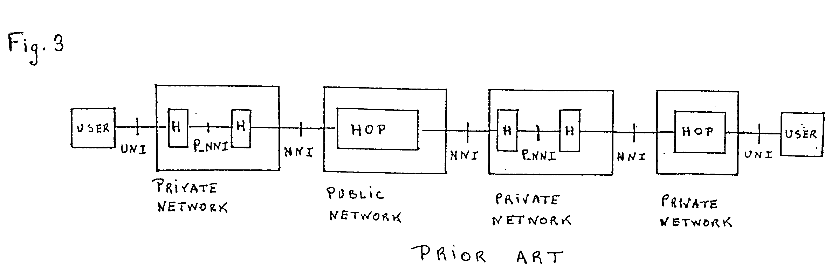

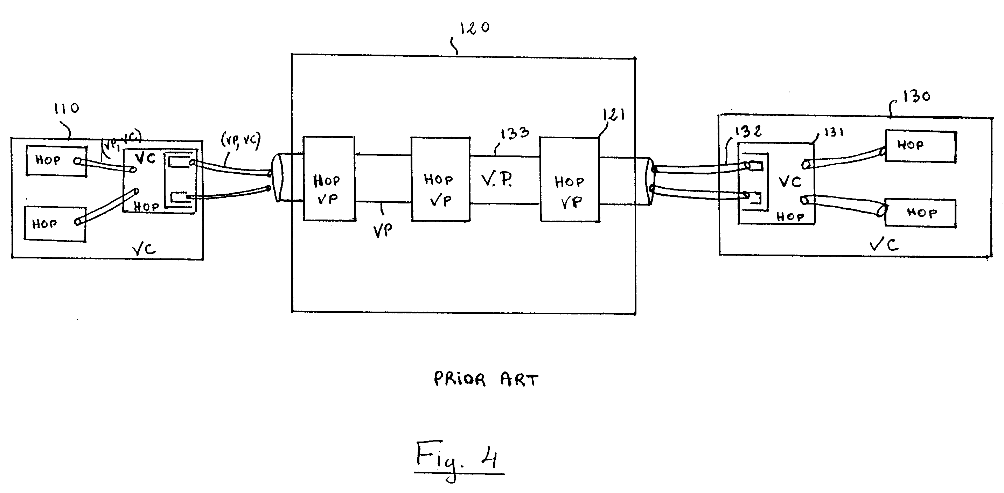

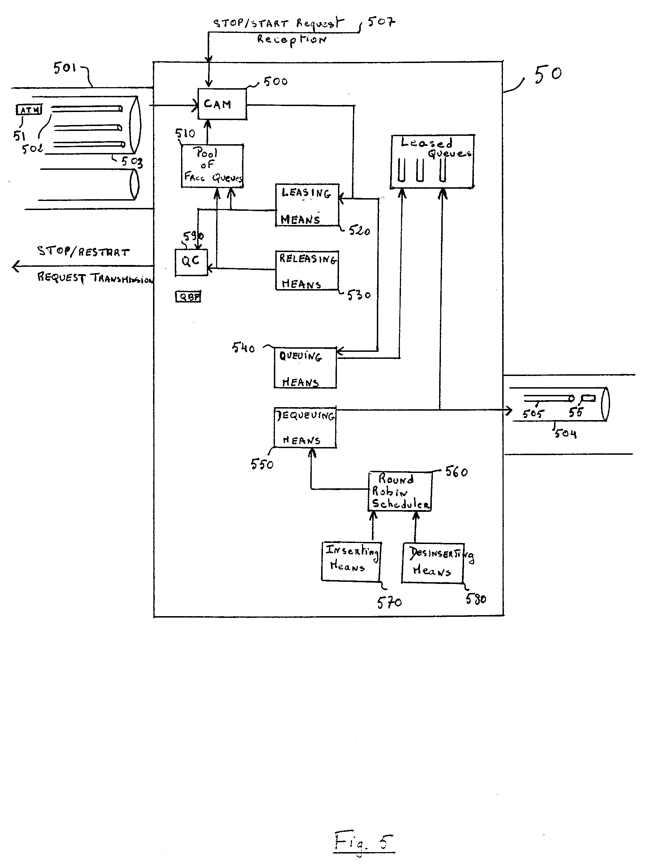

One way to increase link utilization for the network is through the addition of a Non Reserved Bandwidth ( NRB ) service class still called Best Effort ( BE ) service (see Fig. 2). In this service class, no bandwidth at all is reserved and the sources can transmit on a best effort basis, grabbing as much bandwidth as they can, without affecting the RB traffic. Thus, no resources being allocated in advance, the NRB service requires a control flow scheme in order to control the sources. The first objective is to avoid congestion in the network, the second objective is to balance the traffic between the different sources. The backpressure concept, which is one such scheme, has been extensively studied and already implemented. Its principle is to stop at a congested node of the network incoming traffic before losses occur. The information is carried by a backpressure signal which stops or starts the traffic coming from the upstream nodes in the network. In this scheme, every source is supposed to be able to stop or restart its NRB traffic when receiving an appropriate backpressure signal. Such a flow control scheme has been described in the co-pending application, EP94480125, filed on 8 November 1994. This scheme is a hop by hop backpressure mechanism, a hop being well known in the prior art (see Fig. 3) and being defined as any network element with a standard interface at its edges, standard interface being either a User to Network Interface ( UNI ), or a Network to Network Interface ( NNI ), or a Private Network to Network Interface ( P_NNI ). With such a definition, a hop can either be an entire public or private network or only an ATM switch in a network. This backpressure mechanism encompasses two primitives, a selective backpressure primitive which allows any hop to control one best effort connection, and a global backpressure primitive which, in case of global congestion, allows any hop to control one link without sending as many selective backpressure primitives as there are of best effort connections and, blocks the traffic at a link level. The ATM connection routing label is the concatenation of two complementary identifiers: the virtual path identifier VPI and the virtual channel identifier VCI. In an ATM multiplexed link a virtual channel connection is identified by a (VPI,VCI) combination. An ATM switch examine the whole routing label VPI + VCI in order to establish a link between an incoming pair (VPIin, VCIin) and an outgoing pair (VPIout , VCIout). However it is possible for an ATM switch, to route a whole set of virtual channels by analyzing only their VPI identifier. All virtual channel connections with the same VPI are then switched in a similar way. Such a switch is called a VP switch and a network comprising VP switches is called a VP network and is for example described by J. Y. Le Boudec in 'The Asynchronous Transfer Mode: a tutorial', Computer Networks and ISDN Systems, vol. 24, 1992, p. 279-309. The implementation of a selective backpressure mechanism as the one being described in the co-pending application EP94480125 filed on 8 November 1994, in a VP network is not possible because the VP hops (VP switches or VP sub-networks) of said VP network ignore the VCI identifier of the virtual connections. Said VP hops cannot thus meet the selective backpressure requests generated by said selective backpressure mechanism. For example, in the network illustrated in Fig. 4, ATM virtual path network 120 is interconnected with ATM virtual circuit networks 110 and 130. If a congestion occurs in hop 131 due to the data traffic of connection 132, flow control mechanism of said hop 131 tries to throttle said data traffic by sending a selective backpressure signal to hop 121. As said hop 121 is a VP hop, it ignores connection 132. Thus, the only way to stop said congestion is to globally backpressure all connections of said virtual path 133 which is incompatible with a fair flow control management. Another drawback is that it is not possible to control the data traffic between said virtual channels inside the VP network itself since said virtual channels are not defined in said VP network.

## Summary of the invention:

Accordingly, an object of the present invention is to provide a traffic control apparatus which can implement a fair traffic control in an ATM virtual path environment.

To attain the above object, there is provided, according to the present invention, a traffic control apparatus for controlling traffic in a ATM virtual path communication system. The communication system comprises a plurality of hops interconnected by links. Each link comprises a plurality of virtual paths, which comprise a plurality of virtual channels. A connection between two hops is defined as the combination of a physical link, a virtual path, and a virtual channel. Said connections are shared between a reserved bandwidth service and a best effort service. The best effort service is supported by both a per connection and a global hop by hop backpressure mechanism, which is described in the co-pending application EP94480125 filed on 8 November 1994. Instead of routing an ATM data cell by analyzing only its virtual path identifier as in well known VP services, said traffic control apparatus routes said data cell according to its virtual cell connection identifier which is the combination of its virtual data path and virtual data channel identifiers. For this purpose, said traffic control apparatus comprises managing means for managing a pool of free queues for storing said ATM data cells, each of said queues storing all the incoming ATM data cells having the same virtual channel identifier.

More particularly, the invention consists in a traffic control apparatus implemented in an ATM communication system comprising a plurality of hops interconnected by links, each of said links being defined by a link identifier and comprising a plurality of virtual paths, each of said virtual paths being defined by a virtual path identifier VPi and comprising a plurality of virtual channels, each of said channels being defined by a virtual channel identifier VCi, wherein said hops route incoming data cells conveyed by a virtual connection to downstream hops, said cells being identified by a virtual path identifier CVPi , and a virtual channel identifier CVCi, with regard to said virtual path identifier CVPi. Said apparatus comprising identifying means for identifying said CVPi and said CVCi for each incoming data cell, is characterized in that it comprises managing means including:

- a pool of free queues for storing ATM data cells, and

- means for leasing a queue, from said pool of free queues, corresponding to the virtual connection on which said incoming data cell is conveyed if said queue does not already exist, and queuing said incoming data cell into said leased queue, and

- means for queuing an incoming data cell in the queue corresponding to the virtual connection on which said incoming data cell is conveyed, if said queue already exists.

## Brief description of the drawings:

The above object and features of the present invention will be more apparent from the following description with reference to the accompanying drawings, wherein :

Fig. 1 is a diagram of a conventional Reserved Bandwidth service.

Fig. 2 is a diagram of a conventional Non Reserved Bandwidth service.

Fig. 3 is a diagram of a network comprising a plurality of hops.

Fig. 4 is a diagram of a prior art ATM VP network interconnected with 2 ATM VC networks.

Fig. 5 depicts the fair queueing environment.

Fig. 6a is an operation flow of a dynamic queue leasing scheme.

Fig. 6b is an operation flow of a dynamic queue releasing scheme.

Fig. 7a is an operation flow of a selective stop backpressure request reception.

Fig. 7b is an operation flow of a selective start backpressure request reception.

Fig. 8 is an operation flow of a global stop/start backpressure request transmission.

## Detailed description of the preferred embodiment:

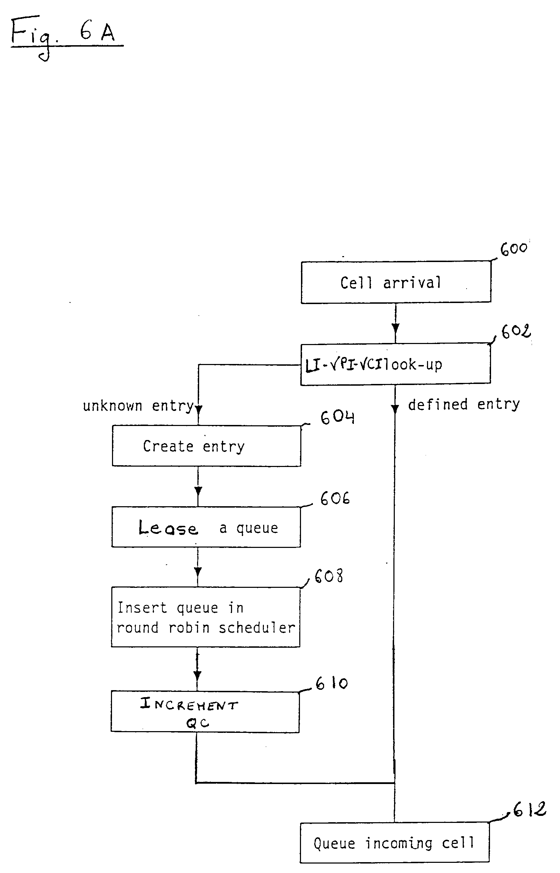

Fig. 5 is a view of a hop fair queuing structure. An ATM cell 51 is conveyed on a virtual connection multiplexed on a physical link 501, said connection is identified by its ATM connection label i.e. link identifier Lid, connection virtual path identifier VPi and connection virtual channel identifier VCi. Said cell is identified by its ATM cell label, i.e. link identifier Lid, cell virtual path identifier CVPi and cell virtual channel identifier CVCi. The ATM cell label is identical to the ATM label of the connection on which said cell has been conveyed.

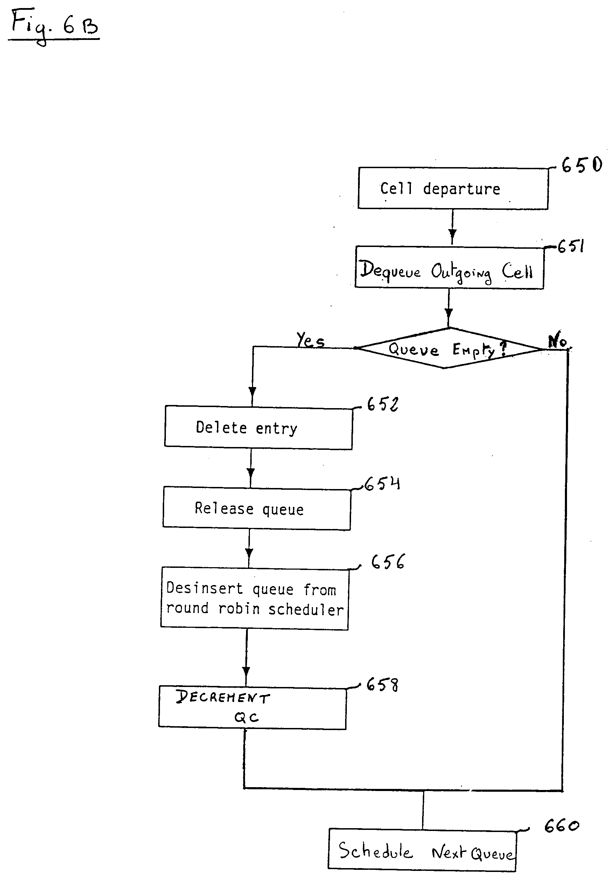

Fig. 6a is an operation flow of a dynamic queue leasing scheme. The reception of an ATM cell 51 in the hop 50 will now be explained with reference to figures 5 and 6a. When an ATM cell 51 is received by the hop 50 ,step 600, a device 500 looks up its ATM label, step 602. In the preferred embodiment of this invention, the look-up device is a content addressable memory. In case the ATM label of said received cell is found in the content addressable memory, a queue corresponding to said cell label is already defined in said hop. The received cell is then queued in said queue corresponding to its ATM label, step 612. In case the ATM label of said received cell is not found in said content addressable memory, the queue corresponding to said label is not currently defined in the hop 50. A new entry corresponding to said ATM cell label is then created in the content addressable memory, step 604, the leasing means 520 lease a queue from the pool of free queues 510, step 606, this step consisting in a dequeue operation in the pool of free queues 510. Said created entry is then associated with said leased queue. Inserting means 570 insert said queue in the round robin scheduler 560, step 608. Counting means 590 increments QC counter, which represents the number of currently leased queues, step 610.

Fig. 6b is an operation flow of a dynamic queue releasing scheme. The transmission of an ATM cell 55 from the hop 50 will now be explained with reference to figures 5 and 6b. A cell 55 scheduled by the round robin scheduler 560, to be transmitted from the hop 50 downstream in the network, is dequeued from its connection queue, step 651. Cell 55 is then sent downstream in the network, if the queue becomes empty, the entry corresponding to the ATM label of the transmitted cell 55 in the content addressable memory 500 is deleted, step 652, and the releasing means 530, release said corresponding queue, step 654. It consists in an enqueue operation in the pool of free queues 510. Counting means 590 decrement the counter of leased queues QC, step 658. Then desinserting means 580 desinsert said corresponding queue from the round robin scheduler 560, step 656. At last the round robin scheduler schedules the next queue, step 660. This is done whether or not said queue is empty.

Cell reception and cell transmission operation flows show that the queuing process is dynamically managed in a hop on a cell basis. A connection is defined i.e. has an entry in the content addressable memory and a queue allocated, as long as there is at least one of the cells conveyed by said connection queued in said hop. Moreover the queuing scheme is fair as there is one queue per ATM connection.

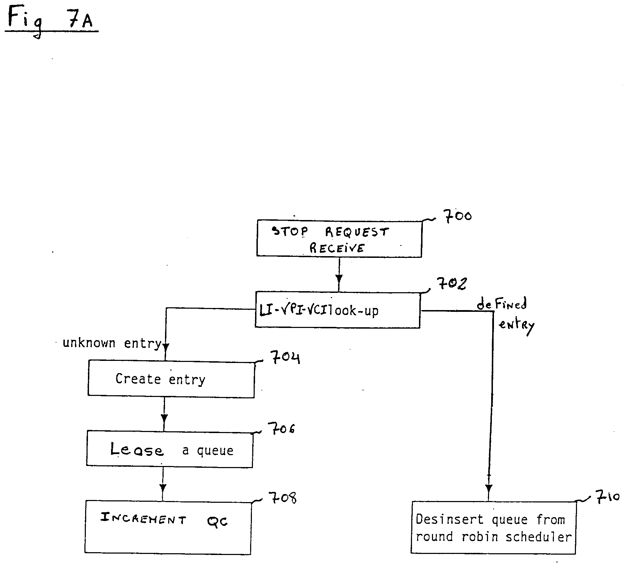

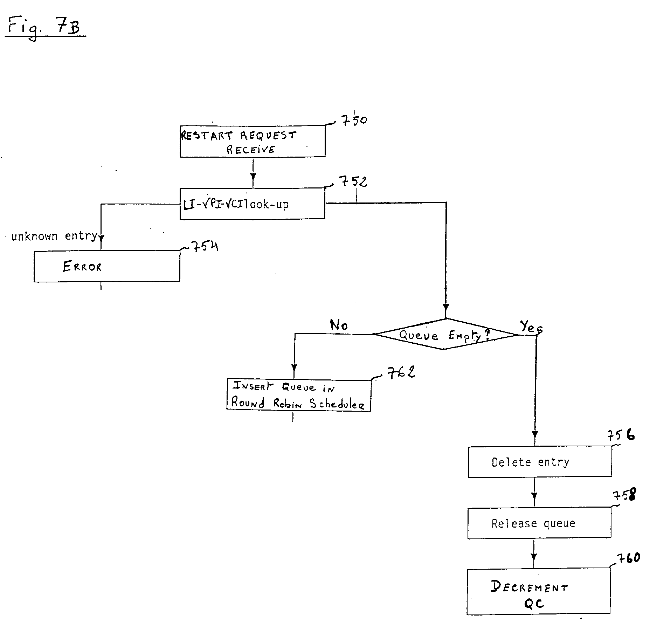

Fig. 7a is an operation flow of a selective stop backpressure request reception. When a congestion occurs in a hop located downstream to the hop 50 due to the excessive throughput of one connection issued from hop 50, the flow control of said downstream node may send a selective backpressure primitive to upstream node 50 in order to stop the data traffic on the connection which is responsible for the congestion. Said backpressure information comprises the label of the connection to be throttled. When a selective stop backpressure 507 arrives at hop 50, step 700, a device 500 looks up the ATM label of the connection to throttle, step 702. In case the ATM label of said connection is found in the content addressable memory 500, desinserting means 580 desinsert the queue corresponding to said connection from the round robin scheduler 560, step 710. This prevents said round robin scheduler to schedule said queue and thus throttle the traffic of said connection. In case the label of said connection is not found in the content addressable memory 500, an entry corresponding to said connection is created in said content addressable memory, step 704, leasing means 520 lease a queue from the pool of free queues 510, step 706, and said created entry is associated with said leased queue. Counting means 590 increment the counter of leased queues QC, step 708. As a queue is allocated, incoming data cells corresponding to said throttled connection will be queued in said queue, but as said queue is not inserted in said round robin scheduler 560, said queue will not be scheduled and then incoming data cells will not be transmitted to the downstream hop, which sent the stop backpressure.

Fig. 7b is an operation flow of a selective restart backpressure request reception. In order to restart the traffic of a throttled connection, a hop located downstream to the hop 50 sends a selective restart backpressure request containing the ATM label of said throttled connection to hop 50. A device 500 looks up the ATM label of the connection to restart, step 752. The case the label of the connection is not found in the content addressable memory 500, step 754, corresponds to an error since any restart request should have been proceeded by a stop request and thus a connection entry should have been defined. If such an error occurs, hop 50 ignores the start request. In case the label of said connection is found in the content addressable memory 500 and the corresponding queue is not empty, said queue is inserted in said round robin scheduler, step 762. Said queued cells will now be transmitted. In case the label of said connection is found and the queue is empty, the entry of said connection is deleted in the content addressable memory 500, step 756, the releasing means 530 release said queue in said pool of free queues, step 758, and counting means 590 decrement the leased connection counter QC, step 760.

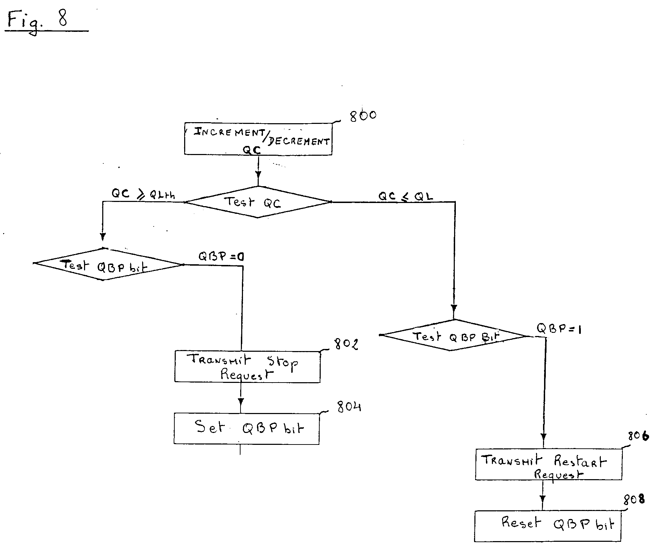

Fig. 8 is an operation flow of a global stop/start backpressure request transmission. In hop 50, two thresholds are associated with counting means 590. A high threshold QLth and a low threshold QLtl with QLth > = QLtl , said high threshold QLtl being set so that the extra number of queues above said high threshold, in said pool of free queues, is greater than the aggregate round trip delay of the upstream hops of hop 50. The round trip delay of an upstream hop of hop 50 is defined as the number of cells sent by said upstream hop to hop 50 and queued in said hop 50, during the time equal to the round trip delay of a cell between said two hops. When the value of the counter of leased queues QC, becomes greater than said high threshold, QLth, the number of leased queues becomes too close to the maximum number of queues, QL, a hop can lease. Hop 50 sends backwards on said entering links to said upstream hops, a stop request, in order to stop the traffic from said entering links, step 802. Consequently, hop 50 will have enough remaining queues in said pool of free queues, to handle the extra traffic received after said stop request has been sent, even in the case all extra cells arriving at hop 50, the maximum being the aggregate round trip delay of the upstream hops, have no entry defined in hop 50 and hence require to lease a queue in hop 50. When sending the stop request, hop 50 sets the QBP bit to one indicating that all the links entering said hop are backpressured, step 804. When the value of counter QC becomes lower than said low threshold QLtl and QBP bit is set, hop 50 sends backwards on said entering links to said upstream hops, a restart request in order to restart the traffic from said entering links, step 806. Once the request has been sent, QBP bit is reset, step 808.

Two points need to be considered when defining said thresholds QLth and QLtl of a hop. First point deals with the high threshold QLth. In order to ensure a loss free operation, the threshold must be set up so that the extra queuing area above the threshold is greater than the aggregate round trip delay of the upstream hops connected to said hop. That can be expressed as follows:

$$QLth < QL - sigma \text{ (round trip delay)}$$

where QL is the maximum number of queues a hop can lease.

Second point deals with the low threshold QLtl which must be chosen high enough in order to ensure a no-underrun operation. The low global threshold QLtl must be set up so that the extra queuing area below said low global threshold is greater than the minimum round trip delay of the upstream hops of said hop. That can be expressed as follows:

$$QLtl > \text{Minimum(round trip delay)}$$

However, a low threshold too close to the high one, would lead to numerous threshold crossings which in turn would lead to an overhead of control information. According to the preferred embodiment of this invention, the low threshold value has been defined as half the high threshold value. That meets the no-underrun condition while being an acceptable trade off between traffic control overhead and traffic underrun.

**Claims**

1. Traffic control apparatus implemented in a ATM communication system, said communication system comprising a plurality of hops (50) interconnected by links (501), each of said link defined by a link identifier comprising a plurality of virtual paths (503), each of said virtual path defined by a virtual path identifier VPi comprising a plurality of virtual channels (502), each of said channel being defined by a virtual channel identifier VCi, the combination of said identifiers defining a virtual connection, wherein said hops route incoming data cells (51) conveyed by a virtual connection to downstream hops, said data cells being identified by a virtual path identifier CVPi, and a virtual channel identifier CVCi, said routing being performed with regard to said virtual path identifier CVPi, said apparatus comprising at each hop (50):

   - identifying means (500) for identifying said CVPi and said CVCi for each incoming data cell (51), said apparatus being characterized in that it comprises managing means including :

   - a pool of free queues (510) for storing ATM data cells, and

   - means for leasing a queue (520), from said pool of free queues, corresponding to the virtual connection on which said incoming data cell is conveyed if said queue does not already exist, and queuing said incoming data cell into said leased queue, and

   - means for queuing (540) an incoming data cell in the queue corresponding to the virtual connection on which said incoming data cell is conveyed, if said queue already exists.

2. Traffic control apparatus according to claim 1, wherein said managing means comprise:

   - a round robin scheduler (560) for scheduling said queues, and

   - inserting means (570) for inserting a queue in said round robin scheduler, and

   - desinserting means (580) for desinserting said queue from said round robin scheduler

3. Traffic control apparatus according to claim 2, wherein said managing means comprise:

   - dequeuing means (550) for dequeuing a cell of a scheduled queue, and

   - means for releasing (530) said scheduled queue in said pool of free queues if said queue becomes empty.

4. Traffic control apparatus according to claim 2 or 3 wherein said managing means are able to stop routing data cells conveyed by a particular virtual connection in response to a first request from a downstream hop.

5. Traffic control apparatus according to claim 4, wherein in response to said first request :

   - if the queue corresponding to said particular virtual connection exists, said managing means desinsert said queue from said round robin scheduler (560), and

   - if the queue corresponding to said particular virtual connection does not exist, said managing means lease a queue from said pool of free queues (510), for said particular virtual connection.

6. Traffic control apparatus according to any of claims 2 to 5, wherein said managing means are able to restart routing data cells conveyed by a particular connection in response to a second request from a downstream hop.

7. Traffic control apparatus according to claim 6 therein in response to said second request :

   - if the queue corresponding to said particular virtual connection is not empty, said managing means insert said queue in said round robin scheduler (560), and

   - if the queue corresponding to said particular virtual connection is empty, said managing means release said queue in said pool of free queues (510)

8. Traffic control apparatus according to any of the preceding claims characterized in that said managing means of a hop comprise:

   - counting means (590) for counting the number of queues leased in said hop, and

   - a high threshold and a low threshold, said high threshold being greater than said low threshold and set so that the extra number of queues above said high threshold, in said pool of free queues, is greater than the aggregate round trip delay of the upstream hops of said hop.

9. Traffic control apparatus according to claim 8 characterized in that when the value of said counting means becomes greater than said high threshold and said upstream hops are not already backpressured, said hop sends backwards on each incoming link (501) to said upstream hops, a stop request, in order to stop the traffic from said entering links.

10. Traffic control apparatus according to claim 8 or 9 characterized in that when the value of said counting means becomes lower than said low threshold and said upstream hops are backpressured, said hop sends backwards on each incoming link (501) to said upstream hops, a restart request in order to restart the traffic from said entering links.

Fig. 1

Traffic
Contract          Network access node

Terminal

USER TO NETWORK INTERFACE

PRIOR ART

Fig. 2

Network
Backpressure     Network access node

Terminal

Threshold
mechanism

USER TO NETWORK INTERFACE

PRIOR ART

EP 0 717 532 A1

Fig. 3

PRIOR ART

Fig. 4

PRIOR ART

Fig. 5

Fig. 6 A

```
                                    ┌──────────────────┐  ┌ 600
                                    │   Cell arrival   │
                                    └──────────────────┘
                                             │
                                             ▼
                    ┌──────────────────────────────────────┐  ┌ 602
                    │        LI-√PI-√CI look-up             │
                    └──────────────────────────────────────┘
                    │                                    │
    unknown entry   ▼                                    ▼  defined entry
            ┌──────────────────────┐  ┌ 604
            │     Create entry     │
            └──────────────────────┘
                      │
                      ▼
            ┌──────────────────────┐  ┌ 606
            │   Lease   a queue    │
            └──────────────────────┘
                      │
                      ▼
            ┌──────────────────────┐  ┌ 608
            │   Insert queue in    │
            │ round robin scheduler│
            └──────────────────────┘
                      │
                      ▼
            ┌──────────────────────┐  ┌ 610
            │     INCREMENT        │
            │        QC            │
            └──────────────────────┘

                    ┌──────────────────────┐  ┌ 612
                    │ Queue incoming cell   │
                    └──────────────────────┘
```

# Fig. 6B

```
                              ┌──────────────────┐ ⌐650
                              │  Cell departure  │
                              └──────────────────┘
                                        │
                                        ▼
                              ┌──────────────────────┐ ⌐651
                              │ Dequeue Outgoing Cell │
                              └──────────────────────┘
                                        │
                                        ▼
              Yes          ◇ Queue Empty? ◇          No.
          ┌──────────────────                ──────────────┐
          ▼                                                 │
  ┌──────────────┐ ⌐652                                     │
  │ Delete entry │                                          │
  └──────────────┘                                          │
          │                                                 │
          ▼                                                 │
  ┌──────────────┐ ⌐654                                     │
  │ Release queue│                                          │
  └──────────────┘                                          │
          │                                                 │
          ▼                                                 │
  ┌──────────────────────┐ ⌐656                             │
  │ Desinsert queue from │                                  │
  │ round robin scheduler │                                 │
  └──────────────────────┘                                  │
          │                                                 │
          ▼                                                 │
  ┌──────────────┐ ⌐658                                     │
  │ DECREMENT    │                                          │
  │     QC       │                                          │
  └──────────────┘                                          │
          │                                                 │
          └─────────────────┬───────────────────────────────┘
                            ▼
                  ┌──────────────────────┐ ⌐660
                  │ Schedule Next Queue  │
                  └──────────────────────┘
```

Fig 7A

```
                              ┌─────────────────────┐ ∿ 700
                              │  STOP   REQUEST     │
                              │      RECEIVE        │
                              └─────────────────────┘
                                        │
                                        ▼
                         ┌──────────────────────────┐ ∿ 702
            ┌────────────│  LI-VPI-VCIlook-up        │──────────┐ deFined
            │            └──────────────────────────┘          │   entry
  unknown entry                                                │
            ▼                                                  │
   ┌─────────────────┐ ∿ 704                                   │
   │  Create  entry  │                                         │
   └─────────────────┘                                         │
            │                                                  │
            ▼                                                  │
   ┌─────────────────┐ ∿ 706                                   │
   │  Lease   a queue│                                         │
   └─────────────────┘                                         ▼
            │                                      ┌───────────────────────┐ ∿ 710
            ▼                                      │ Desinsert queue from  │
   ┌─────────────────┐ ∿ 708                       │ round robin scheduler │
   │  INCREMENT  QC  │                             └───────────────────────┘
   │                 │
   └─────────────────┘
```

Fig. 7B

RESTART REQUEST
RECEIVE — 750

LI-√PI-√CI look-up — 752

unknown entry

ERROR — 754

No ◁ Queue Empty? ▷ Yes

INSERT Queue IN
Round Robin Scheduler — 762

Delete entry — 756

Release queue — 758

DECREMENT
QC — 760

Fig. 8

EP 0 717 532 A1

**European Patent Office**

# EUROPEAN SEARCH REPORT

Application Number

EP 94 48 0170

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | INTERNATIONAL TELETRAFFIC CONGRESS, AMSTERDAM, NL, pages 143-149, B. DOSHI ET AL. 'Memory, bandwidth, processing and fairness considerations in real time congestion controls for broadband networks' | 1 | H04L12/56 |
| Y | * paragraph 5.2.2 * --- | 2 | |
| Y | GLOBECOM '90, vol. 1, December 1990 USA, pages 12-20, C. R. KALMANEK ET AL. 'Rate controlled servers for very high speed networks' * page 15, left column, line 1 - page 16, left column, line 2 * --- | 2 | |
| A | EP-A-0 430 570 (AMERICAN TELEPHONE AND TELEGRAPH CO.) * column 7, line 14 - line 26 * * column 11, line 10 - line 41 * * claims 1-4 * --- | 1,2 | TECHNICAL FIELDS SEARCHED (Int.Cl.6) H04L |
| A | BUSINESS COMMUNICATION REVIEW, vol. 24, no. 9, USA, pages 78-82, D. HUNT 'ATM traffic management another perspective' * the whole document * --- | 1-10 | |
| A | EP-A-0 272 939 (OKI ELECTRIC INDUSTRY COMPANY LIMITED) * column 2, line 47 - column 3, line 27 * * claims 1,2 * * figures 1A,1B * --- | 1 | |
|  | -/-- | | |

The present search report has been drawn up for all claims

| Place of search | Date of completion of the search | Examiner |
|---|---|---|
| THE HAGUE | 24 July 1995 | Perez Perez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

## EUROPEAN SEARCH REPORT

European Patent
Office

Application Number

EP 94 48 0170

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US-A-5 231 633 (HLUCHYJ ET AL.)<br>* abstract *<br>* figure 5 *<br>----- | 1 | |
| | | | **TECHNICAL FIELDS SEARCHED** (Int.Cl.6) |

The present search report has been drawn up for all claims

| Place of search | Date of completion of the search | Examiner |
|---|---|---|
| THE HAGUE | 24 July 1995 | Perez Perez, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.......................................................................
& : member of the same patent family, corresponding
   document

EPO FORM 1503 03.82 (P04C01)